# EUROPEAN PATENT APPLICATION

(11) **EP 1 447 688 A1**
(43) Date of publication of application: **18.08.2004**
(21) Application number: 02775401.9
(22) Date of filing: 28.10.2002
(51) Int. Cl.: G02B 5/30, G02F 1/13357, G02F 1/13363, G02F 1/1335

(54) **CIRCULAR POLARIZING PLATE AND LIQUID CRYSTAL DISPLAY DEVICE**

(30) Priority: 19.11.2001 JP 2001353745
(71) Applicant: Nippon Oil Corporation, Tokyo 105-8412 (JP)
(72) Inventor: UESAKA, Tetsuya, c/o NIPPON OIL CORPORATION, Yokohama-shi, Kanagawa 231-0815 (JP); YODA, Eiji, c/o NIPPON OIL CORPORATION, Yokohama-shi, Kanagawa 231-0815 (JP); OGASAWARA, Toyokazu, c/o NIPPON OIL CORPORATION, Yokohama-shi, Kanagawa 231-0815 (JP)
(74) Representative: Grünecker, August, Dipl.-Ing.
(86) International application number: PCT/JP2002/011142
(87) International publication number: WO 2003/044575

(57) **Abstract**

A circular polarizer comprises at least a polarizer and an optical anisotropic element having an optical retardation of about 1/4 wavelength in a visible light region, wherein the optical anisotropic element comprises at least a 50 µm or less thick liquid crystal film (A) obtained by fixing a liquid crystal substance exhibiting an optically positive uniaxiality, in a nematic hybrid orientation with an average tilt angle of 5 to 35 degrees, formed when the substance is in a liquid crystal state, thereby providing a favorable circular polarization characteristics with a decreased thickness. The use of this circular polarizer makes it possible to produce a transflective type liquid crystal device which is capable of providing bright display images of high contrast and is less dependent on the viewing angle.

## Description

### [Technical Field]

The present invention relates to circular polarizers and liquid crystal display devices provided with the same.

### [Background Art]

In recent years, liquid crystal display devices have been highly expected to expand their markets in the field of displays for personal digital assistants (PDA) where their thin and light characteristics can be fully utilized. Since such personal digital assistants (PDA) are generally driven with batteries, it has been necessary to keep the electricity to be consumed as low as possible. Therefore, an attention has been drawn particularly to reflective type liquid crystal display devices for the personal digital assistants which are free of or need not always use an electricity-consuming back light and can be reduced in electricity consumption, thickness, and weight.

There have been widely used reflective type liquid crystal display devices with two polarizers for black-and-white display, in which a liquid crystal cell is sandwiched between a pair of polarizers and a reflector is disposed the outside of one of the polarizers. More recently, a reflective type liquid crystal display device with a single polarizer in which a liquid crystal layer is sandwiched between a polarizer and a reflector has been proposed and practically used because it is brighter in principle than those with two polarizers and is easy to be colored, as reported in JAPAN DISPLAY, 192 (1989) by T. Sonehara et al. In such a single polarizer reflective type liquid crystal display device, a 1/4 wavelength plate is used as an optical retardation plate disposed between a polarizer and a liquid crystal cell such that the optical retardation plate has a substantial circular polarizing function and the thickness of the liquid crystal layer in the liquid crystal cell is adjusted to be on the order of about 1/4 wavelength, thereby obtaining a normally white reflective liquid crystal display device, as described in Japanese Patent Laid-Open Publication No. 6-11711 and International Publication Pamphlet No. 98/4320. However, these reflective type liquid crystal display devices have a drawback that the displayed images become invisible when they are used in a dark place because they usually display the images using light from the outside of the display devices.

To solve this problem, there has been proposed a transflective liquid crystal display device operable as both reflective and transmissive types, with a single polarizer in which a transflector having characteristics that part of an incident light is allowed to transmit is used instead of a reflector and a back light is provided, as described in Japanese Patent Laid Open Publication No. 10-206846. Therefore, this display device is operable as a reflective type, i.e., reflective mode using light from the outside when the back light is off and as a transmissive type, i.e., transmissive mode using the back light under the dark situations.

In the transmissive mode of the transflective liquid crystal display device with a single polarizer, it is necessary to make an incident of substantially circularly polarized light to the liquid crystal cell through the transflector. Therefore, a circular polarizer comprising one or more polymeric stretched films, typically polycarbonates and a polarizer must be disposed between the transflector and the back light. However, the liquid crystal display device in the transmissive mode can not avoid problems relating to the viewing angle that the displayed images are changed in color and decreased in contrast when viewed obliquely, due to the birefringence peculiar to liquid crystal molecules, and it is essentially difficult to enlarge the viewing angle with a circular polarizer having polymeric stretched films.

In recent years, although personal digital assistants are increasingly demanded to be made thinner and lighter and components used for the displays are thus strongly required to be made lighter and thinner, there is a limit in making them thinner with polymeric stretched films due to restrictions caused by the optical characteristics and production methods thereof.

The object of the present invention is to provide a circular polarizer which has excellent circular polarization characteristics and can be made thinner and a transflective type liquid crystal display device which is bright, high in contrast, and less dependence on the viewing angle.

### [Disclosure of the Invention]

That is, according to a first aspect of the present invention, there is provided a circular polarizer comprising at least a polarizer and an optical anisotropic element having an optical retardation of about 1/4 wavelength in a visible light region, wherein the optical anisotropic element comprises at least a 50 µm or less thick liquid crystal film (A) obtained by fixing a liquid crystal substance exhibiting an optically positive uniaxiality, in a nematic hybrid orientation with an average tilt angle of 5 to 35 degrees, formed when the substance is in a liquid crystal state.

According to a second aspect of the present invention, there is provided the circular polarizer of the first aspect wherein the optical anisotropic element comprises at least the liquid crystal film (A) and a polymeric stretched film.

According to a third aspect of the present invention, there is provided the circular polarizer of the first aspect wherein the optical anisotropic element comprises at least the liquid crystal film (A) and a 50 µm or less thick liquid crystal film (B) obtained by fixing a liquid crystal substance exhibiting an optically positive uniaxiality, in a nematic orientation formed when the substance is in a liquid crystal state.

According to a forth aspect of the present invention, there is provided the circular polarizer of the first to third aspects wherein the liquid crystal film (A) is a liquid crystal film obtained by allowing a liquid crystal substance exhibiting an optically positive uniaxiality, in a liquid crystal state, to be aligned in a nematic hybrid orientation and by cooling the aligned substance to be fixed in a glassy state.

According to a fifth aspect of the present invention, there is provided the circular polarizer of the first to third aspects wherein the liquid crystal film (A) is a liquid crystal film obtained by allowing a liquid crystal substance exhibiting an optically positive uniaxiality, in a liquid crystal state, to be aligned in a nematic hybrid orientation and by fixing the aligned substance by cross-linking.

According to a sixth aspect of the present invention, there is provided a liquid crystal display device comprising a liquid crystal cell wherein a liquid crystal layer is sandwiched between a pair of substrates each having an electrode, and the circular polarizer of the first aspect.

According to a seventh aspect of the present invention, there is provided a transflective type liquid crystal display device comprising a liquid crystal display device provided with a liquid crystal cell wherein a liquid crystal layer is sandwiched between a first substrate with a transparent electrode and a second substrate with a transflective electrode; at least one optical retardation compensator disposed on the surface, opposite to the surface facing to the liquid crystal layer, of the first substrate; and one polarizer disposed on the optical retardation compensator, wherein the circular polarizer of the first aspect is disposed on the surface, opposite to the surface facing the liquid crystal layer, of the second substrate.

According to an eighth aspect of the present invention, there is provided a transflective type liquid crystal display device comprising a liquid crystal display device provided with a liquid crystal cell wherein a liquid crystal layer is sandwiched between a first substrate with a transparent electrode and a second substrate with a transflective electrode; at least one optical retardation compensator disposed on the surface, opposite to the surface facing to the liquid crystal layer, of the second substrate; and one polarizer disposed under the optical retardation compensator, wherein the circular polarizer of the first aspect is disposed on the surface, opposite to the surface facing the liquid crystal layer, of the first substrate.

According to a ninth aspect of the present invention, there is provided a transflective type liquid crystal display device comprising a liquid crystal display device provided with a liquid crystal cell wherein a liquid crystal layer is sandwiched between a first substrate with a transparent electrode and a second substrate with a transflective electrode, wherein the circular polarizers of the first aspect are disposed on both sides of the liquid crystal cell.

According to a tenth aspect of the present invention, there is provided the liquid crystal display device of any of the sixth to ninth aspects, wherein the liquid crystal layer is of a twisted nematic mode.

According to an eleventh aspect of the present invention, there is provided the liquid crystal display device of any of the sixth to ninth aspects, wherein the liquid crystal layer is of a super twisted nematic mode.

According to a twelfth aspect of the present invention, there is provided the liquid crystal display device of any of the sixth to ninth aspects, wherein the liquid crystal layer is of an ECB mode.

According to a thirteenth aspect of the present invention, there is provided the liquid crystal display device of any of the sixth to ninth aspects, wherein the liquid crystal layer is of a HAN mode.

The present invention will be described in more details below.

The circular polarizer of the present invention comprises at least a polarizer and an optical anisotropic element with an optical retardation of about 1/4 wavelength in a visible light region. Although a plurality of optical anisotropic elements may be used, sufficient optical characteristics can be obtained even with a single optical anisotropic element.

No particular limitation is imposed on a polarizer constituting the circular polarizer of the present invention as long as it can achieve the purposes of the present invention. Therefore, any conventional polarizers generally used in a liquid crystal display device may be used, but preferred are thin-film type polarizers which have recently been developed in compliance with the demand on a thin polarizer. Specific examples of such polarizers are PVA (polyvinyl alcohol) -based polarizing films such as PVA and partial acetal PVA; polarizing films such as those obtained by stretching a hydrophilic polymeric film which comprises a partially saponified product of an ehtylene-vinyl acetate copolymer and to which iodine and/or a dichroic dye are absorbed; and polarizing films comprising a polyene-oriented film such as dehydrated products of PVA and dehydrochlorinated products of polyvinyl chloride. Alternatively, there may be used reflective type polarizing films.

These polarizers may be used in the form of a single polarizing film or in combination with a transparent protective layer which may be provided on one or both surfaces of the polarizer for the purpose of enhancing the strength, moisture resistance, and heat resistance. Examples of the transparent protective layer include those formed by laminating a transparent plastic film such as polyester and triacetyl cellulose directly or via an adhesive layer on the polarizer; coated layers of transparent resin; and acrylic- or epoxy-based photo-setting type resin layers. When the transparent protective layers are coated on both surfaces of the polarizer, they may be the same or different. The thickness of the transparent protective layer is preferably 100 µm or less, more preferably 60 µm or less, and particularly preferably 45 µm or less with the objective of reducing the total thickness and weight. A transparent protective layer with a thickness deviating the range is not preferable because it does not comply with one of the purposes of the present invention, i.e., fails to provide a thin polarizer.

The optical anisotropic element constituting the circular polarizer of the present invention comprises at least a liquid crystal film (A) obtained by fixing a liquid crystal substance exhibiting an optically positive uniaxiality, more specifically a low molecular weight liquid crystal substance exhibiting an optically positive uniaxiality; a polymeric liquid crystal compound exhibiting an optically positive uniaxiality; or a polymeric liquid crystal substance such as a polymeric liquid crystal composition containing at least one type of polymeric liquid crystal compound and exhibiting an optically positive uniaxiality, in a nematic hybrid orientation with an average tilt angle of 5 to 35 degrees, formed when the substance or compound is in a liquid crystal state, and is an element having an optical retardation of approximately 1/4 wavelength in a visible light region.

As used herein, the term "nematic hybrid orientation" refers to an orientation structure wherein liquid crystal molecules are aligned in a nematic phase wherein the angle of the director of a liquid crystalline molecule relative to the film upper surface and the angle of the director of a liquid crystalline molecule to the film lower surface are different from each other. Therefore, since the angles formed by the directors and the film planes are different between in the vicinities of the upper and lower interface of the film, the nematic hybrid orientation can be defined by an orientation wherein the tilt angle varies continuously between the upper and lower film surfaces.

In a liquid crystal film with a fixed nematic hybrid orientation structure, the directors of the liquid crystalline molecules are directed at different angles in all the positions in the film thickness direction. Therefore, it can be said that there no longer exists optical axis in the whole film structure.

As used herein, the term "average tilt angle" refers to an average value of the angles defined between the directors of the liquid crystalline molecules and a film plane, in the thickness direction of the liquid crystal film (A). In the liquid crystal film (A) used in the present invention, the absolute value of the angle formed by the directors of the liquid crystalline molecules and the projected surface thereof to one film surface is generally 40 to 90 degrees, preferably 60 to 90 degrees, while the absolute value of the angle formed by the directors of the liquid crystalline molecules and the projected surface thereof to the other film surface is generally 0 to 30 degrees, preferably 0 to 20 degrees. The absolute value of the average tilt angle is generally from 5 to 35 degrees, preferably 7 to 33 degrees, more preferably 10 to 30 degrees, and most preferably 13 to 27 degrees. The average tilt angle, if deviating from the above range, would cause the decrease of contrast of the resulting liquid crystal display device provided with the circular polarizer of the present invention when the device is viewed from an oblique direction. The average tilt angle can be determined by applying a crystal rotation method.

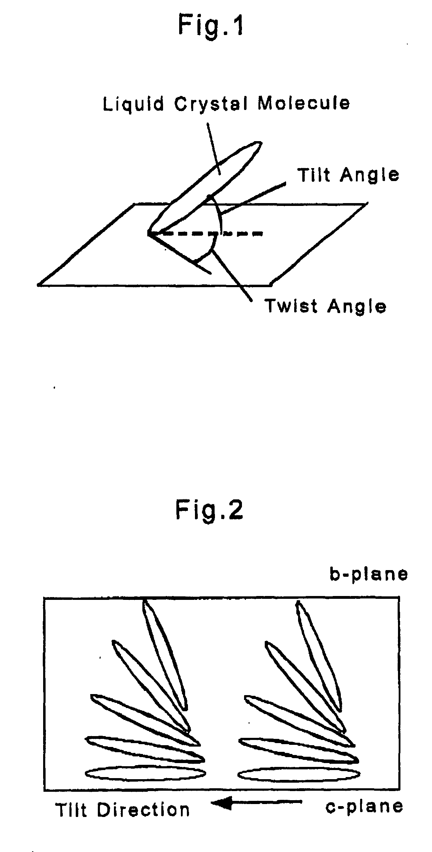

Fig. 1 shows the conceptual view for describing the tilt angle and twist angle of a liquid crystal molecule.

The liquid crystal film (A) constituting the optical anisotropic element used in the present invention may be formed from any liquid crystal as long as the film has a fixed nematic hybrid orientation structure and a specific average tilt angle, as described above. For example, the film may be a liquid crystal film obtained by aligning a low molecular weight liquid crystal substance in a liquid crystal state, in a nematic hybrid orientation and fixing the aligned orientation structure by photo- or thermal-cross-linking or a liquid crystal film obtained by aligning a polymeric liquid crystal substance, in a liquid crystal state in a nematic hybrid orientation and fixing the aligned orientation structure by cooling. As used herein, the term "liquid crystal film" refers to those obtained by forming a liquid crystal substance such as a low molecular weight or polymeric liquid crystal substance into a film, regardless of whether the liquid crystal film itself exhibits a liquid crystallinity or not.

An apparent retardation value in the plane of a liquid crystal film when viewing the film from the normal direction is explained as follows. That is, in a liquid crystal film with a fixed nematic hybrid orientation structure, the refractive index (nₑ) parallel to directors is different from the refractive index (nₒ) perpendicular to directors. Therefore, assuming that the value obtained by subtracting nₒ from nₑ is an apparent birefringence, an apparent retardation value is given as the product of the apparent birefringence and the absolute film thickness. This apparent retardation value is easily obtained by a polarization optical measurement such as ellipsometry.

As one preferred embodiment of the circular polarizer of the present invention, the optical anisotropic element comprises at least the liquid crystal film (A) and a 50 µm or less thick liquid crystal film (B) obtained by fixing a liquid crystal substance exhibiting an optically positive uniaxialilty, in a nematic orientation formed when the substance is in a liquid crystal state.

The liquid crystal film (B) constituting the optical anisotropic element used in the present invention may be formed from any liquid crystal as long as the film has a fixed nematic orientation structure. For example, the film may be a liquid crystal film obtained by aligning a low molecular weight liquid crystal substance in a liquid crystal state, in a nematic orientation and fixing the orientation structure by photo- or thermal- cross-linking or a liquid crystal film obtained by aligning a polymeric liquid crystal substance in a liquid crystal state, in a nematic orientation and fixing the orientation structure by cooling. Similarly to the liquid crystal film (A), "liquid crystal film (B)"' refers to those obtained by forming a liquid crystal substance such as a low molecular weight or polymeric liquid crystal substance into a film, regardless of whether the liquid crystal film itself exhibits a liquid crystallinity or not.

The thickness of each of the liquid crystal films (A) and (B) is preferably 50 µm or less, more preferably 30 µm or less, and particularly preferably 20 µm or less with the objective of reducing the thickness and weight of the resulting polarizer. A liquid crystal film (A) or (B) with a thickness deviating the range is not preferable because it does not comply with one of the purposes of the present invention, i.e., fails to provide a thin polarizer.

As another preferred embodiment of the circular polarizer of the present invention, the optical anisotropic element comprises at least the liquid crystal film (A) and a polymeric stretched film.

No particular limitation is imposed on the polymeric stretched film as long as it is excellent in transparency and uniformity. However, preferred polymeric stretched films are those obtained by uniaxially or biaxially stretching films formed from resins selected from cellulose-, polycarbonate-, polyallylate-, polysulfone-, polyvinylalcohol-, polyacryl-, polyethersulfone-, and cyclic olefin-based polymers by melt extrusion or solvent casting under a suitable heating condition. The retardation value of the films is preferably within the range described later. The thickness of the films can not be determined with certainty because it depends on the strength of the selected resin and the birefringence value taking place by stretching but is preferably 100 µm or less and more preferably 50 µm or less. A polymeric stretched film with a thickness deviating the range is not preferable because it does not comply with one of the purposes of the present invention, i.e., fails to provide a thin polarizer. Among the above polymeric stretched films, preferred are cyclic olefin- and polycarbonate-based stretched films with the objective of optical characteristics and uniformity.

A description will now be given of the retardation value (product of birefringence An and thickness d) of the optical anisotropic element.

The description will be made separately with respect to the case where the optical anisotropic element is constituted only by the liquid crystal film (A) and the case where the optical anisotropic element is constituted by the liquid crystal film (A) and either the polymeric stretched film or the liquid crystal film (B) with a fixed nematic orientation.

In the case where the optical anisotropic element is constituted by only the liquid crystal film (A), the apparent retardation value thereof is in the range of generally 70 nm to 180 nm, preferably 90 nm to 160 nm, and particularly preferably 120 nm to 150 nm, for a monochromatic light of 550 nm thereby obtaining excellent circular polarization characteristics. If the apparent retardation is less than 70 nm or greater than 180 nm, there may occur an unnecessary coloration in the resulting liquid crystal display device.

In the case where the optical anisotropic element is constituted by the liquid crystal film (A) and either the polymeric stretched film or the liquid crystal film (B), excellent polarization characteristics can be obtained by laminating a 1/4 wavelength plate whose optical retardation of the birefringence light for a monochromatic light of 550 nm is approximately 1/4 wavelength and a 1/2 wavelength plate whose optical retardation of the birefringence light for a monochromatic light of 550 nm is approximately 1/2 wavelength, with their slow axes crossing each other, as described in Japanese Patent Laid-Open Publication No. 10-068816. The retardation value of the 1/4 wavelength plate is in the range of generally 70 nm to 180 nm, preferably 90 nm to 160 nm, and particularly preferably 120 nm to 150 nm. The retardation value of the 1/2 wavelength plate is in the range of generally 180 nm to 320 nm, preferably 200 nm to 300 nm, and particularly preferably 220 nm to 280 nm. If the retardation of either the 1/4 or 1/2 wavelength plate deviates the above ranges, there may occur an unnecessary coloration in the resulting liquid crystal display device.

The angle formed by the slow axes of the 1/4 and 1/2 wavelength plates is in the range of generally 40 to 90 degrees, preferably 50 to 80 degrees, and particularly preferably 55 to 75 degrees, at the acute angle side.

The liquid crystal film (A) may be used as the 1/4 or 1/2 wavelength plate.

In the case of using the liquid crystal film (A) as the 1/4 wavelength plate, the 1/2 wavelength plate may be the polymeric stretched film or the liquid crystal film (B). In the case of using the liquid crystal film (A) as the 1/2 wavelength plate, the 1/4 wavelength plate may be the polymeric stretched film or the liquid crystal film (B).

Next, the arrangement conditions of the optical anisotropic elements comprising the liquid crystal film (A), of the circular polarizer will be described in more details. In order to describe the specific arrangement conditions, the upper and lower planes and tilt direction of the liquid crystal film (A) and the pretilt direction of a liquid crystal cell are defined as follows, respectively.

First of all, the upper and lower planes of the liquid crystal film (A) will be described.

In Fig. 2, when the upper and lower planes of the liquid crystal film (A) are defined by the angles formed by the directors of the liquid crystalline molecules in the vicinity of the film interfaces and the film planes, the plane forming an angle of 40 to 90 degrees at the acute angle side with the director is defined as "b-plane", while the plane forming an angle of 0 to 30 degrees at the acute angle side with the director is defined as "c-plane".

When the c-plane is viewed from the b-plane through the liquid crystal film (A), the direction in which the angle between the director of a liquid crystal molecule and the projection thereof to the c-plane is acute and which is parallel to the projection is defined as "tilt direction".

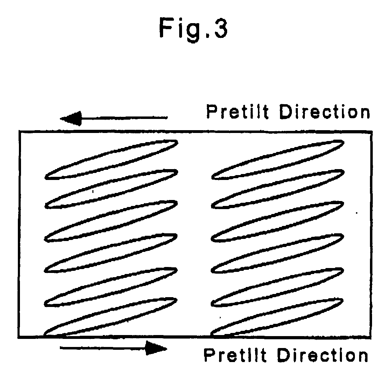

Next, in Fig. 3, generally, on the interface between a liquid crystal cell substrate and a liquid crystal layer (hereinafter referred to as "cell interface"), the liquid crystal molecule constituting the liquid crystal layer is not parallel to the cell interface and tilted at a certain angle, which angle is generally referred to as "pre-tilt angle". However, a direction along which the director of a liquid crystalline molecule on the cell interface and the projection thereof form an acute angle and which is parallel to the projection is defined as "pre-tilt direction of the liquid crystal cell".

Although the circular polarizer of the present invention comprises at least a polarizer and an optical anisotropic element comprising the liquid crystal film (A), the circular polarizer may contain one or more layers selected from protection layers, anti-reflection layers, anti-glare layers, hard coat layers, adhesive layers, tacky adhesive layers, photo-diffusing layers, and photo-diffusing adhesive layers.

Described next will be a method of producing the liquid crystal films (A) and (B).

The liquid crystal films (A) and (B) can be produced using the same method except for using a liquid crystal substance whose orientation state before being fixed is a nematic hybrid phase, for the liquid crystal film (A) and using a liquid crystal substance whose orientation state before being fixed a nematic phase, for the liquid crystal film (B).

As used herein, the term "liquid crystal substance layer with a fixed liquid crystal orientation" refers to a layer obtained by fixing a liquid crystal substance in an orientation state by any suitable fixing method. The fixing method is exemplified by a method wherein a low molecular weight or polymeric liquid crystal substance having a reactive functional group is aligned, treated such that the functional group is reacted, and then fixed by curing or cross-linking. In the case of using a polymeric liquid crystal substance, there is an alternative method wherein a polymeric liquid crystal substance in an aligned state is quenched so as to be in a glassy state and fixed. Example of quenching methods include a method wherein a liquid crystal substance is removed from a heating process to in the air at ordinary temperature and a forced-cooling method such as wherein a liquid crystal substance is blown with a cold gas, contacted with cooling rollers, or put into water. Examples of reactive functional groups include vinyl, (meth) acryloyl, vinyloxy, epoxy, oxetane, carboxyl, hydroxyl, amino, and acid anhydride groups, each of which may be reacted in a manner suitable therefor.

Liquid crystal substances which can be used for the liquid crystal substance layer may be selected from a wide range of substances regardless of whether they are low molecular weight or polymeric liquid crystal substances, depending on the intended uses of the circular polarizer and production methods thereof. However, polymeric liquid crystal substances are preferably used.

Polymeric liquid crystal substances may be various main chain-type polymeric liquid crystal substances, side chain-type polymeric liquid crystal substances, and mixtures thereof. Examples of main chain-type polymeric liquid crystal substances include polyester-, polyamide-, polycarbonate-, polyimide-, polyurethane-, polybenzimidazole-, polybenzoxazole-, polybenzthiazole-, polyazomethine-, polyesteramide-, polyestercarbonate-, and polyester imide-based polymeric liquid crystal substances, and mixtures thereof. Examples of side chain type-polymeric liquid crystal substances include those wherein a mesogen group as a side chain bonds to substances having a straight-chain or cyclic main chain, such as polyacrylate-, polymethacrylate-, polyvinyl-, polysiloxane-, polyether-, polymalonate-, and polyester-based substances, and mixtures thereof. Among these substances, the main chain-type polymeric liquid crystal substances are preferable and polyester-based ones are particularly preferable, with the objectives of easy synthesis and aligning.

Examples of low molecular weight liquid crystal substances include compounds exhibiting liquid crystallinity obtained by introducing the above-described reactive functional group to the terminal ends of compounds such as saturated benzene carboxylic acid derivatives, unsaturated benzene carboxylic acid derivatives, biphenylcarboxylic acid derivatives, aromatic oxycarboxylic acid derivatives, Schiff base derivatives, bis-azo methine compound derivatives, azo compound derivatives, azoxy compound derivatives, cyclohexane ester compound derivatives, or sterol compound derivatives; and compositions obtained by adding a cross-linkable compound to any compounds exhibiting liquid crystallinity selected from the above-exemplified compound derivatives.

Alternatively, various compounds having a functional group or site reactive by thermal or photo cross-linking may be blended with the liquid crystal substance to an extent that the substance is not inhibited from exhibiting liquid crystallinity. Examples of such cross-linkable functional groups include various reactive functional groups as described above.

A composition containing the above-described liquid crystal substance and various compounds added if necessary in a molten state or in the form of a solution is coated over an alignment substrate so as to form a film layer. The film layer is then dried and heated to be aligned in a liquid crystal orientation and if necessary is subjected to any of the above-described fixing methods such as photo irradiation and/or heat treatment (polymerization/cross-linking) so as to fix the aligned orientation thereby forming a liquid crystal substance layer with a fixed liquid crystal orientation.

No particular limitation is imposed on a solvent used for preparing the solution to be coated over an alignment substrate as long as it can dissolve the liquid crystal substance or composition used in the present invention and be evaporated under appropriate conditions. Preferred examples of the solvent are ketones such as acetone, methylethyl ketone, and isophorone; ether alcohols such as butoxyethyl alcohol, hexyloxyethyl alcohol, and methoxy-2-propanol; glycol ethers such as ethylene glycol dimethylether and diethylene glycol dimethyl ether; esters such as ethyl acetate, methoxypropyl acetate, and ethyl lactate; phenols such as phenol and chlorophenol; amides such as N,N-dimethylformamide, N,N-dimethylacetoamide, and N-methylpyrrolidone; halogenated hydrocarbons such as chloroform, tetrachloroethane, and dichlorobenzene; and mixtures thereof. A surfactant, a defoaming agent, or a leveling agent may be added to the solution so as to form a uniform film layer on an alignment substrate. Furthermore, for the purpose of coloring, dichroic dyes, normal dyes, and pigments may be added to an extent that they do not prevent the liquid crystal substance from exhibiting a liquid crystallinity.

No particular limitation is imposed on a method of coating as long as the uniformity of the film layer can be maintained. Therefore, there may be used any conventional method such as roll coating, die coating, dip coating, curtain coating, and spin coating methods. The coating may be followed by a solvent-removing process, i.e., drying using a heater or a hot air blowing. The film thickness of the coating in a dried state is from 0.1 µm to 50 µm, preferably 0.2 µm to 20 µm. A film thickness deviating the range is not preferred because the resulting liquid crystal substance layer would be poor in optical performance characteristics and would be aligned insufficiently.

Thereafter, the liquid crystal orientation is fixed, if necessary after forming a liquid crystal substance into a liquid crystal orientation structure. In this heat treatment, the liquid crystal substance is heated to a range of temperatures at which the substance exhibits a liquid crystal phase, so as to be aligned in a liquid crystal orientation by its self-alignability which the substance essentially possesses. Since the optimum conditions and limited values for the heat treatment vary depending on the liquid crystal phase behavior temperature (transition temperature) of a liquid crystal substance to be used, they can not be determined with certainty. However, the heat treatment temperature is conducted at a temperature within the range of usually 10 to 300 °C, preferably 30 to 250 °C. At a too low temperature, aligning of a liquid crystal substance may not progress sufficiently, while at a too high temperature, a liquid crystal substance would be decomposed or the alignment substrate would be adversely affected. The heat treatment time is usually 3 seconds to 60 minutes, preferably 10 seconds to 30 minutes. The heat treatment time for shorter than 3 seconds is not preferred, because there is a possibility that aligning of a liquid crystal substance may not be completed. Whereas the heat treatment for longer than 60 minutes is not also preferred, because the productivity is extremely deteriorated. After a liquid crystal substance is completely aligned in a liquid crystal orientation by a heat treatment, the liquid crystal substance layer on an alignment substrate is fixed using a method suitable for the liquid crystal substance used.

Examples of alignment substrates include films of such as polyimide, polyamide, polyamideimide, polyphenylene sulfide, polyphenylene oxide, polyether ketone, polyetherether ketone, polyether sulfone, polysulfone, polyethylene terephthalate, polyethylene naphthalate, polyarylate, triacetyl cellulose, epoxy resins, and phenol resins and uniaxially stretched films thereof. Some of these films exhibit a sufficient alignability for the liquid crystal substance used in the present invention depending on the production method of the films even though they are not subjected to a treatment for providing alignability. However, if a film does not have alignability sufficiently or at all, the film may be stretched under an appropriate heating treatment; subjected to a rubbing treatment wherein the film is rubbed in one direction with a rayon cloth or wherein the film is rubbed after an aligning layer of a conventional aligning agent such as polyimide, polyvinyl alcohol, or a silane coupling agent is formed over the film; subjected to oblique vapor deposition using silicon oxide; or subjected to the combination of these treatments so as to be provided with alignability. Alternatively, the aligning substrate may be metal plates of aluminum, iron, or copper and various glass plates on which surfaces fine grooves are regularly formed.

If the liquid crystal substance layer formed on an alignment substrate is self-supportive, the circular polarizer of the present invention can be obtained by laminating the substance layer on a polarizer. If the liquid crystal substance layer is not self-supportive, the substance layer is transferred via a suitable adhesive or tacky adhesive layer onto a releasable substrate as described below and then laminated on the polarizer thereby obtaining the circular polarizer of the present invention.

Described next will be a method of producing the thinned circular polarizer of the present invention.

No particular limitation is imposed on a method of producing the circular polarizer. However, for example, the circular polarizer may be produced through the following processes:
(1) after a liquid crystal substance layer with a fixed nematic hybrid orientation, on an alignment substrate is adhered via an adhesive layer to a releasable substrate 1 and the adhesive is cured by cross-linking in a manner selected depending on the type of adhesive, the alignment substrate is released thereby transferring the liquid crystal substance layer on the releasable substrate 1;
(2) a releasable substrate 2 is adhered via an adhesive layer on the liquid crystal substance layer transferred on the releasable substrate 1 by curing the adhesive by cross-linking in a manner selected depending on the type of adhesive;
(3) the releasable substrate 1 or 2 is released, and an adhesive layer 1 preferably having a separator film is formed on the released surface of the liquid crystal substance layer; and
(4) a polarizer is laminated on the surface of the adhesive layer 1 from which the separator film is released or a polarizer having an adhesive layer 2 formed thereon beforehand is laminated on the surface from which the remaining releasable substrate 1 or 2 is released.

Whereby, the circular polarizer with the following layer structure can be produced:
polarizer / adhesive layer 2/ adhesive layer / liquid crystal substance layer / adhesive layer / adhesive layer 1; or
polarizer / adhesive layer 1 / adhesive layer / liquid crystal substance layer / adhesive layer / releasable substrate 1 (the releasable substrate 1 is released if necessary when the circular polarizer is used).

The above "/" indicates the interface of each of the layers and is used in the same manner hereinafter.

Alternatively, in the above processes a plurality of liquid crystal substance layers can be laminated via an adhesive or tacky adhesive layer using an alignment substrate on which a liquid crystal substance layer is formed, instead of using the releasable substrate 2.

The circular polarizer of the present invention can also be produced through the following processes:
(1) a liquid crystal substance layer 1 with a fixed nematic hybrid orientation, formed on an alignment substrate 1 is adhered via an adhesive layer to a releasable substrate 1 by curing the adhesive by cross-linking in a manner selected depending on the type of adhesive, and the alignment substrate is released thereby transferring the liquid crystal substance layer 1 on the releasable substrate 1;
(2) the liquid crystal substance layer 1 transferred on the releasable substrate 1 is adhered via an adhesive on a liquid crystal substance layer 2 with a fixed orientation, formed on another alignment substrate 2, and then the alignment substrate 2 is released. (In this case, the liquid crystal substance layers 1 and 2 may be the same or different. For example, they may be the combination of the liquid crystal films (A), the liquid crystal films (A) and (B), or the liquid crystal film (A) and a polymeric stretched film but not the liquid crystal film (B). It is obvious that a substrate corresponding to the alignment substrate 2 is not always needed when a polymeric stretched film is used. The following is an illustration as to the case where only the liquid crystal films are used. Since either the liquid crystal film (A) or (B) may be produced at first, the films are referred to as "liquid crystal substances 1 and 2" instead of distinguishing the films as liquid crystal film A and liquid crystal film B.)
(3) a releasable substrate 2 is adhered via an adhesive to the liquid crystal substance layer 2 transferred on the releasable substrate 1 by curing the adhesive by cross-linking in a manner selected depending on the type of adhesive;
(4) the releasable substrate 1 or 2 is released, and an adhesive layer 1 preferably having a separator film is formed on the released surface of the liquid crystal substance layer;
(5) a polarizer is laminated on the adhesive layer 1 with the separator film released or a polarizer having an adhesive layer 2 formed thereon beforehand is laminated on the surface from which the remaining releasable substrate 1 or 2 is released.

As a result, the following layered structure can be produced:
polarizer / adhesive layer 2 / adhesive layer / liquid crystal substance layer 1 / adhesive layer / liquid crystal substance layer 2 / adhesive layer / adhesive layer 1.

In the case where a plurality of liquid crystal substance layers are laminated, a liquid crystal substance layer with a fixed orientation, on an alignment substrate is laminated repeatedly on the liquid crystal substance layer transferred on the releasable substrate 1, obtained in the above process (1) , thereby increasing the number of laminated liquid crystal substance layers.

Alternatively, a parting layer can be formed between the liquid crystal substance layers and the other layers using a releasable substrate on which a parting layer releasable therefrom is formed beforehand.

The total thickness of the circular polarizer of the present invention produced by the above-described methods is 450 µm or less, preferably 350 µm or less, and more preferably 300 µm. A circular polarizer with a thickness deviating the range is not preferable because it does not comply with one of the purposes of the present invention, i.e., fails to provide a thin circular polarizer.

No particular limitation is imposed on releasable substrates used herein as long as they are releasable and self-supportive. Eligible plastic films for releasable substrates are cast films and various uniaxially or biaxially stretched films. Specific examples include olefin-based films such as polyethylene, polypropylene, and poly-4-methylpentene-1 resin and films of such as polyamide, polyimide, polyamideimide, polyetherimide, polyether ketone, polyetherether ketone, polyether sulfone, polysulfone, polystyrene, polyphenylene sulfide, polyethylene terephthalate, and polyethylene naphthalate.

In order to control the releasability of releasable substrates, there may be used those obtained by subjecting a surface of the above described plastic films to a releasing agent treatment using silicon or fluorine resin, a treatment for forming an organic or inorganic film layer, a chemical treatment or a physical treatment such as corona discharge.

Alternatively, if necessary, on a releasable substrate may be formed a parting layer releasable therefrom beforehand. No particular limitation is imposed on a parting layer as long as it is a transparent layer which is optically isotropic and does not harm the optical characteristics of the liquid crystal substance layer. Eligible parting layers are copolymers of acryl-, methacryl-, nitrocellulose-, and epoxy-based compounds, and mixtures thereof. The physical properties of the parting layer may be controlled by partial cross-linking using a cross-linking component or by adding a plasticizer or a lubricant.

The parting layer is released from the releasable substrate and then incorporated via an adhesive into a liquid crystal film or the circular polarizer of the present invention. No particular limitation is imposed on a method of forming a parting layer on a releasable substrate. A parting layer can be formed by a conventional printing method such as gravure printing or a conventional coating method such as roll- or die-coating.

No particular limitation is imposed on adhesives used for producing the circular polarizer as long as they have enough adhesiveness to a liquid crystal substance layer and a polarizer and do not harm the optical characteristics of the liquid crystal substance layer. For example, adhesives may be acrylic resin-, methacrylic resin-, epoxy resin-, ethylene-vinyl acetate copolymer-, rubber-, urethane-, polyvinylether-based adhesives, and mixtures thereof and various reactive adhesives such as of thermal curing and/or photo curing types, and electron radiation curing types.

The reaction conditions, i.e., those for curing the reactive adhesives vary depending on the formulation, viscosity and reaction temperature thereof. Therefore, the reactive adhesives may be cured under the conditions properly selected. For example, photo-curing type adhesives may be blended with various known photo initiators and reacted with light irradiated from a light source such as a metal halide lamp, a high-pressure mercury lamp, a low-pressure mercury lamp, a xenon lamp, an arc discharge lamp, a laser, and a synchrotron radiation light source. The irradiation dose per unit area (1 cm²) is within the range of generally 1 to 2,000 mJ and preferably 10 to 1,000 mJ in the integrated irradiation dose. However, when the absorption region of the photo initiator is extremely different from the spectrum of the light source or the reactive compound itself can absorb a light in the wavelength of the light source, the irradiation dose is not limited to the above range. In these cases, a method may be employed in which a suitable photo sensitizer or two or more types of photo initiators having different absorption wavelengths from each other are used. The electron radiation curing type adhesives may be cured at an accelerating voltage of generally 10 kV to 200 kV and preferably 50 kV to 100 kV.

The thickness of the adhesive varies depending on the components, strength, and temperatures at which it is used, but is usually in the range of 1 to 50 µm, preferably 3 to 30 µm. A thickness outside these ranges is not preferred because the adhesive strength would be insufficient and the adhesive seeps out from the edges of the layer on which it is applied.

Furthermore, to the adhesive may be added various additives such as anti-oxidants and ultraviolet absorbing agents to an extent that they do not harm the effects achieved by the present invention.

Alternatively, in the present invention, the above-described adhesive may be replaced by a tacky adhesive which has enough tackiness to a liquid crystal substance layer, a parting layer, and a polarizer and does not harm the optical characteristics of the liquid crystal substance layer. Examples of such a tacky adhesive include acrylic resin-, methacrylic resin-, rubber-, and polyvinylether-based tacky adhesive compositions. The thickness of the tacky adhesive varies depending on the components, strength, and temperatures at which it is used, but is usually in the range of 1 to 50 µm, preferably 3 to 30 µm. A thickness outside these ranges is not preferred because the tacky adhesive strength would be insufficient and the tacky adhesive seeps out from the edges of the layer on which it is applied.

For the purpose of controlling optical characteristics, to these adhesives or tacky adhesives may be added various fine particles to an extent that they do not harm the characteristics of these adhesives. Examples of such fine particles are fine particles having a different refractive index from compounds constituting the adhesive or tacky adhesive, conductive fine particles for improving anti-static properties without harming transparency, and fine particles for improving wear resistance. More specific examples are fine silica, ITO (Indium Tin Oxide) fine particles, silver fine particles, and various synthetic resin fine particles.

The liquid crystal display device of the present invention comprises at least a liquid crystal cell wherein a liquid crystal layer is sandwiched between a pair of substrates each having an electrode and the above-described circular polarizer. A liquid crystal display device is generally constituted by a polarizer and a liquid crystal cell and if necessary components such as an optical retardation compensator, a transflector, a photo diffusing layer, a back light, a front light, a photo-controlling film, a light guide plate, and a prism sheet. No particular limitation is imposed on the structure of the liquid crystal display device of the present invention except that it is provided with the circular polarizer of the present invention. No particular limitation is imposed on where the circular polarizer is disposed. Therefore, the circular polarizer may be disposed on one or more locations in the liquid crystal display device.

No particular limitation is imposed on a liquid crystal cell used in the present invention. Therefore, eligible liquid crystal cells are conventional ones wherein a liquid crystal layer is sandwiched between a pair of transparent substrates each having an electrode.

No particular limitation is imposed on a pair of transparent substrates as long as they can align a liquid crystalline material formed into a liquid crystal layer in a specific direction. More specific examples include those which themselves have a property of aligning a liquid crystalline material and those which themselves have no capability of aligning but are provided with an alignment layer capable of aligning a liquid crystalline material. Electrodes provided on a transparent substrate may be conventional ones and provided on a surface of a transparent substrate on which surface the liquid crystalline material contacts. In the case of using a transparent substrate with an alignment layer, an electrode is provided between the alignment layer and the transparent substrate.

No particular limitation is imposed on a liquid crystalline material formed into the above-described liquid crystal layer. Examples of the liquid crystalline material include conventional various low molecular weight liquid crystal substances, polymeric liquid crystal substances, and mixtures thereof. The liquid crystalline material may be blended with dyes, chiral dopoants, or non-liquid crystalline substances to an extent that they do not prevent the liquid crystal substance from exhibiting liquid crystallinity.

In addition to the above-described transparent substrates having an electrode and liquid crystal layer, the liquid crystal cell may be provided with various constituting elements necessary to obtain liquid crystal cells of the following various modes.

Examples of such liquid crystal cell modes include TN (Twisted Nematic), STN (Super Twisted Nematic), ECB (Electrically Controlled Birefringence), IPS (In-Plane Switching), VA (Vertical Alignment), OCB (Optically Compensated Birefringence), HAN (Hybrid Aligned Nematic), ASM (Axially Symmetric Aligned Microcell), Half Tone Gray Scale mode, Domain Dividing modes, and display modes using a ferroelectric liquid crystal and an antiferroelectric liquid crystal.

No particular limitation is imposed on the driving mode of a liquid crystal cell. Therefore, the driving mode may be any of a passive matrix mode used in an STN-LCD, an active matrix mode using active electrodes such as TFT (Thin Film Transistor) electrodes and TFD (Thin Film Diode) electrodes, and a plasma address mode.

No particular limitation is imposed on optical retardation compensators used in the liquid crystal display as long as they have excellent transparency and uniformity. There may be preferably used polymeric stretched films and optical compensation films comprising liquid crystal. Examples of polymeric stretched films are uniaxial or biaxial optical retardation films formed with cellulose-, polycarbonate-, polyallylate-, polysulfone-, polyvinylalcohol (PVA) -, polyacryl, polyethersulfone-, or cyclic olefin-based polymers. Among these, polycarbonate-based polymers are preferred in terms of easy production and film uniformity.

No particular limitation is imposed on an optical compensation film comprising a liquid crystal as long as it is a film which can align a liquid crystal and utilize an optical anisotropy generating from the aligned state. For example, there may be used various conventional optically functional films using a nematic, smectic or discotic liquid crystal.

Described next will be the retardation value (product of birefringence Δn and film thickness d) of the optical retardation compensator.

The retardation value will be described with respect to the case where the optical retardation compensator is formed by one sheet thereof and the case where the compensator is formed by two sheets thereof, respectively.

The retardation value of the optical retardation compensator formed by one sheet thereof is within the range of generally 70 nm to 180 nm, preferably 90 nm to 160 nm, and particularly preferably 120 nm to 150 nm, for a monochromatic light of 550 nm thereby obtaining excellent display characteristics. If the retardation value is less than 70 nm or greater than 180 nm, there may occur an unnecessary coloration in the resulting liquid crystal display device.

In the case where the optical retardation compensator is formed by two sheets thereof, excellent display characteristics can be obtained by laminating a 1/4 wavelength plate whose optical retardation of the birefringence light for a monochromatic light of 550 nm is approximately 1/4 wavelength and a 1/2 wavelength plate whose optical retardation of the birefringence light for a monochromatic light of 550 nm is approximately 1/2 wavelength, with their slow axes crossing each other, as described in Japanese Patent Laid-Open Publication No. 10-068816. The retardation value of the 1/4 wavelength plate is within the range of generally 70 nm to 180 nm, preferably 90 nm to 160 nm, and particularly preferably 120 nm to 150 nm. The retardation value of the 1/2 wavelength plate is in the range of generally 180 nm to 320 nm, preferably 200 nm to 300 nm, and particularly preferably 220 nm to 280 nm. If the retardation value of the 1/4 and 1/2 wavelength plates deviates the above ranges, there may occur an unnecessary coloration in the resulting liquid crystal display device.

No particular limitation is imposed on a transflector used in the liquid crystal display device. Therefore, the transflector may be a metal such as aluminum, silver, gold, chromium, and platinum; an alloy containing one or more of these metals; an oxide such as magnesium oxide; a multi-layer film of dielectrics; a liquid crystal exhibiting a selective reflectivity; and combinations thereof. These transflector may be flat or curved and may be those provided with diffusive reflectivity by forming rugged patterns on its surface; those having a function as the electrode on the transparent substrate located on the side opposite to the observer's side; those which are made thin or provided with holes so as to transmit a part of light; or any combination thereof.

In the present invention, the transflector is preferably used as a transflective electrode formed on a transparent substrate of a liquid crystal cell.

A light diffusing layer may have properties to diffuse incident light isotropically or anisotropically. For example, there may be used those comprising two or more regions and having a refractive index difference therebetween or those having on their surfaces rugged patterns. Examples of the light diffusing layer comprising two or more regions and having a refractive index difference therebetween include those wherein particles having a different refractive index from those of matrixes are dispersed therein. The light diffusing layer itself may have tacky adhesion or adhesion properties.

Although not restricted, the thickness of the light diffusing layer is usually 10 µm or more and preferably 500 µm or less.

The total light transmittance of the light diffusing layer is preferably 50 percent or more and particularly preferably 70 percent or more. The haze value of the layer is generally from 10 to 95 percent, preferably from 40 to 90 percent, and more preferably from 60 to 90 percent.

No particular limitation is imposed on a back light, a front light, a light-controlled film, a light guide plate, and a prism sheet used for the liquid crystal display device. Therefore, they may be conventional ones.

In addition to the above-described components, the liquid crystal display device of the present invention may be provided with another additional components. For example, the use of a color filter makes it possible to produce a color liquid crystal display device which can provide multi- or full- colored display images with increased color purity.

The liquid crystal display device of the present invention is a conventional liquid crystal display device provided with the circular polarizer of the present invention but is preferably a transflective liquid crystal display device comprising at least a liquid crystal cell constituted by sandwiching a liquid crystal layer between a pair of transparent substrates each provided with an electrode and a transflector disposed in the rear of the liquid crystal layer, viewed from an observer, in combination with the circular polarizer of the present invention which may be disposed at any position closer to an observer than the liquid crystal layer, in the rear of the transflector, viewed from an observer, or on both sides of the liquid crystal layer.

In the case where the circular polarizer is disposed only on the observer's side, at least one optical retardation compensator and one polarizer are preferably disposed in the rear of the transflector, viewed from an observer. In the case where the circular polarizer is disposed in the rear of the transflector, viewed from an observer, at least one optical retardation compensator and one polarizer are preferably disposed on the side closer to an observer than the liquid crystal layer. In this case, two sheets of the optical retardation compensators are particularly preferably arranged because excellent displays can be achieved.

The circular polarizer is preferably located in the rear of the transflector, viewed from an observer and particularly preferably located on both sides of the liquid crystal layer.

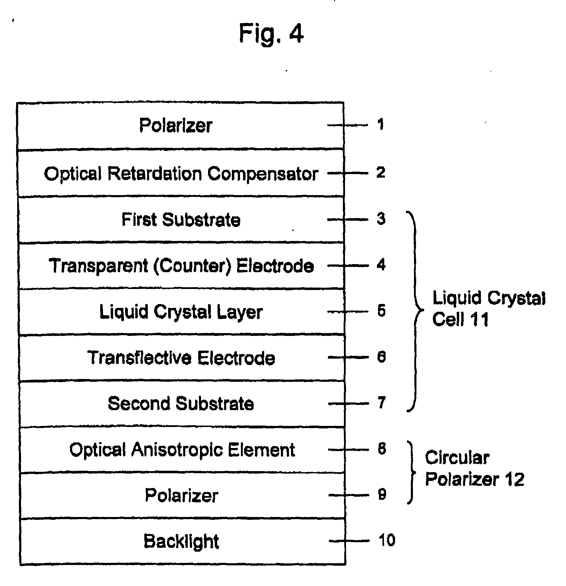

Figs. 4 to 6 schematically show the preferred structures of the transflective liquid crystal display device of the present invention.

Fig. 4 shows a transflective liquid crystal display device comprising a liquid crystal cell 11 constituted by sandwiching a liquid crystal layer 5 between a first substrate 3 having a transparent (counter) electrode 4 and a second substrate 7 having a transflective electrode 6; at least one optical retardation compensator 2 placed on the first substrate 3; and one polarizer 1 placed on the optical retardation compensator 2, wherein the circular polarizer 12 of the present invention is placed under the second substrate 7.

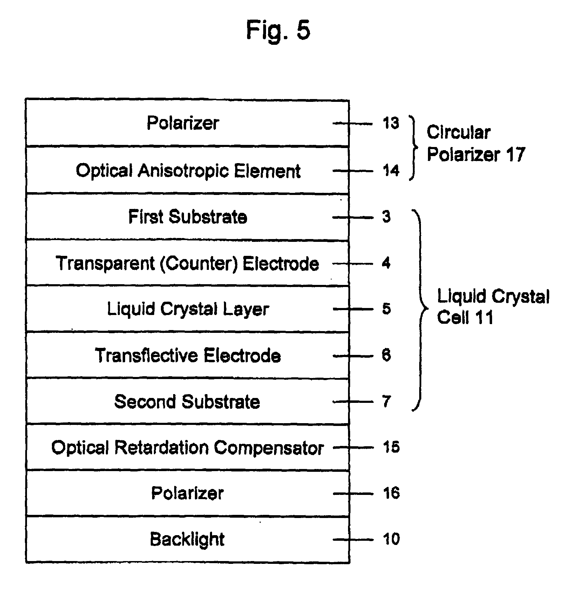

Fig. 5 shows a transflective liquid crystal display device comprising a liquid crystal cell 11 constituted by sandwiching a liquid crystal layer 5 between a first substrate 3 having a transparent (counter) electrode 4 and a second substrate 7 having a transflective electrode 6; at least one optical retardation compensation plate 15 placed under the second substrate 7; and at least one polarizer 16 placed under the optical retardation compensator 15, wherein the circular polarizer 17 of the present invention is placed on the first substrate 3.

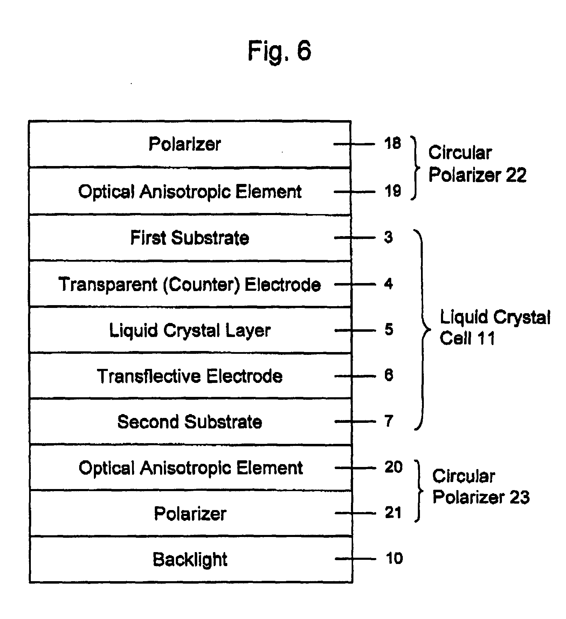

Fig. 6 shows a transflective liquid crystal display device comprising a liquid crystal cell 11 constituted by sandwiching a liquid crystal layer 5 between a first substrate 3 having a transparent (counter) electrode 4 and a second substrate 7 having a transflective electrode 6, wherein the circular polarizers 22, 23 of the present invention are placed on both sides of the liquid crystal cell 11, respectively.

The transflective-type liquid crystal display device is operable both in a reflective mode and in a transmissive mode by arranging a back light in the backmost viewed from an observer.

In the case of using a TN-LCD mode liquid crystal cell, the twisted angle thereof is usually 30 degrees or larger and 85 degrees or smaller, preferably 45 degrees or larger and 80 degrees or smaller, and more preferably 55 degrees or larger and 70 degrees or smaller because excellent display characteristics can be obtained in combination with the circular polarizer of the present invention.

In the transflective-type liquid crystal display device of the present invention, the liquid crystal layer is preferably of twisted-nematic mode, super twisted-nematic mode, ECB mode, or HAN mode.

### [Best Mode for Carrying out the Invention]

The present invention will be further described with reference to the following inventive and comparative examples but is not limited thereto. The retardations (product of birefringence Δn and film thickness d) in the examples are values at a wavelength of 550 nm, unless stated otherwise.

### Example 1

Acetylation was conducted at a temperature of 140 °C under a nitrogen atmosphere using 100 mmol of 6-hydroxy-2-naphthoic acid, 100 mmol of terephthalic acid, 50 mmol of chlorohydroquinone, 50 mmol of tert-butylcatechol, and 600 mmol of acetic anhydride, for 2 hours. Thereafter, polymerization was conducted at 270 °C for 2 hours, at 280 °C for 2 hours, and at 300 °C for 2 hours. The resulting reaction product was dissolved in tetrachloroethane and then reprecipitated with methanol to be purified thereby obtaining 40.0 g of a liquid crystalline polyester (polymer 1). The polymer 1 was found to be 0.35 dl/g in inherent viscosity measured in a phenol/tetrachloroethane mixed solvent (mass ratio: 6/4) at a temperature of 30 °C and exhibited a nematic phase as the liquid crystal phase. It was also confirmed that the isotropic phase-liquid crystal phase transition temperature and glass transition temperature of the polymer 1 were 300 °C or higher and 135 °C, respectively.

In 80 g of N-methyl-2-pyrrolidone was dissolved 20 g of the polymer 1 thereby preparing a solution. The solution was spin-coated over a polyimide film, "KAPTON" manufactured by Du Pont Co., having been rubbed with a rayon cloth. The coated solution was dried to remove the solvent and then heated at a temperature of 210 °C for 20 minutes thereby forming a nematic hybrid orientation structure. The film was cooled to room temperature to fix the nematic hybrid orientation structure thereby obtaining a uniformly aligned 0.7 µm actual thick liquid crystal substance layer on the polyimide film (liquid crystal substance layer 1). The thickness was measured using a contact pin type thickness meter.

Onto the liquid crystal substance layer 1 (surface opposite to the polyimide film) was coated a commercially available UV-curing type adhesive "UV-3400" manufactured by Toagosei Co., Ltd. (adhesive layer 1) with a thickness of 5 µm. Onto the adhesive layer 1 was laminated a 25 µm thick polyethylene terephthalate film (PET film 1) "S10" manufactured by Toray Industries, Inc. used for a releasable substrate, followed by an ultraviolet ray irradiation of about 600 mJ so as to cure the adhesive layer 1. Thereafter, the polyimide film was released from the laminate of PET film 1 /adhesive layer 1 /liquid crystal substance layer 1 /polyimide film so as to transfer the liquid crystal substance layer 1 to the releasable substrate, i.e., PET film 1 thereby obtaining liquid crystal substance layer 2. Onto the liquid crystal substance surface of the liquid crystal substance layer 2 was coated a commercially available UV-curing type adhesive "UV-3400" manufactured by Toagosei Co., Ltd. with a thickness of 5 µm thereby forming an adhesive layer 2. Onto the adhesive layer 2 was laminated a 25 µm thick polyethylene terephthalate film (PET film 2) "S10" manufactured by Toray Industries, Inc. used for a releasable substrate, followed by an ultraviolet ray irradiation of about 600 mJ so as to cure the adhesive layer 2. Thereafter, the PET films 1 and 2 were released from the laminate of PET film 1 / adhesive layer 1 / liquid crystal substance / adhesive layer 2 / PET film 2 thereby a 11 µm thick liquid crystal film (A) having no supporting substrate. It was confirmed that the liquid crystal film (A) had an average tilt angle in the thickness direction of 28 degrees and a Δnd of 100 nm.

While the PET film 1 was released from the laminate of PET film 1 / adhesive layer 1 / liquid crystal substance layer / adhesive layer 2 / PET film 2, a polarizer having a tacky adhesive layer ("SQW-862" manufactured by Sumitomo Chemical Industry Co., Ltd. with a thickness of about 180 µm) was laminated on the adhesive layer 1. Similarly, a 60 µm thick polymeric stretched film formed by a uniaxially stretched polycarbonate film was laminated on the adhesive layer 2 with releasing the PET film 2 thereby obtaining the circular polarizer of the present invention.

### Example 2

As shown in Fig. 4 illustrating the layer arrangement, a liquid crystal layer 5 formed of a liquid crystalline material exhibiting a positive dielectric constant anisotropy is sandwiched between a transflective electrode 6 constituted by a highly reflective material such as Al formed on a second substrate 7 and a counter electrode 4 formed on a first substrate 3. An optical retardation compensator 2 and a polarizer 1 are arranged on the surface, opposite to the counter electrode 4, of the first substrate 3. A circular polarizer 12 constituted by an optical anisotropic element 8 and a polarizer 9 is arranged on the surface, opposite to the transflective electrode 6, of the second substrate 7. A back light 10 is also provided on the rear side of the polarizer 9.

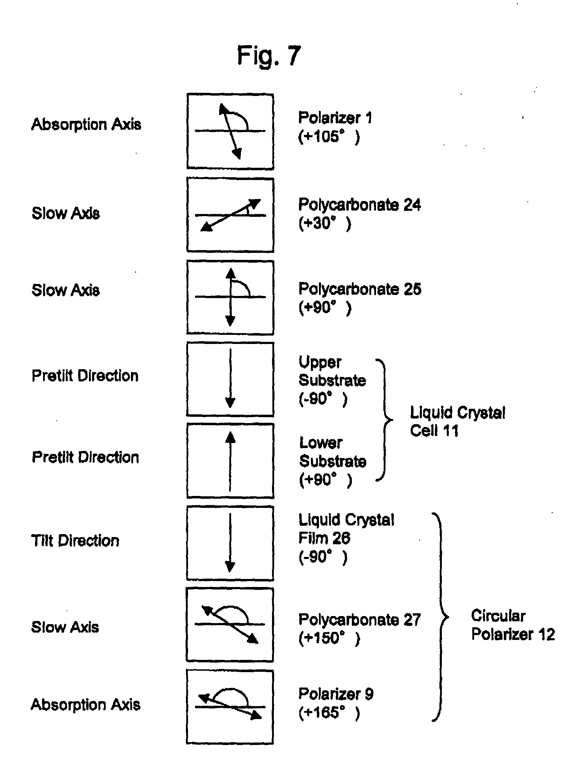

An ECB-type transflective liquid crystal display device with the components arrangement shown in Fig. 7 was produced using the 11 µm thick liquid crystal film (A) with a fixed nematic hybrid orientation wherein the average tilt angle in the thickness direction was 28 degrees, obtained in Example 1.

A liquid crystal cell 11 used herein contained ZLI-1695 manufactured by Merck Ltd as a liquid crystalline material which had been formed into a homogenously-oriented liquid crystal layer with a thickness of 5.0 µm. The pretilt angle at the cell interface was 2 degrees, while the Δnd of the liquid crystal cell was approximately 310 nm.

A polarizer 1 with a thickness of 180 µm (SQW-862 manufactured by Sumitomo Chemical Industry Co., Ltd.) was arranged on the observer's side (upper portion in the drawing) of the liquid crystal cell 11. Between the polarizer 1 and the liquid crystal cell 11 was arranged an optical retardation compensator 2 constituted by 60 µm thick uniaxially stretched polycarbonate films 24 and 25. The Δnd of the polycarbonate film 24 was approximately 250 nm, while the Δnd of the polycarbonate film 25 was approximately 113 nm.

In the rear of liquid crystal cell 11, viewed from an observer was arranged a circular polarizer 12 constituted by the 11 µm thick liquid crystal film (A) 26 with a fixed nematic hybrid orientation, a 60 µm thick polymeric stretched film 27 formed by a uniaxially stretched polycarbonate film, and a polarizer 9 (SQW-862 with a thickness of about 180 µm, manufactured by Sumitomo Chemical Industry Co., Ltd.) and a back light 10 (not shown). The Δnd of the liquid crystal film (A) 26 was 100 nm, while the Δnd of the polymeric stretched film 27 was 265 nm. The circular polarizer 12 was a laminate wherein each layer was laminated to each other via a 25 µm thick tacky adhesive layer, i.e., polarizer / tacky adhesive layer / polycarbonate / tacky adhesive layer / adhesive layer 1 / liquid crystal substance layer / adhesive layer 2 / tacky adhesive layer. The total thickness of the circular polarizer was 326 µm.

The absorption axes of the polarizers 1 and 9, the slow axes of the polymeric stretched films 24, 25 forming the optical retardation compensator and of the polymeric stretched film 27 which is a component of the circular polarizer 12, the pretilt direction of liquid crystal cell 11 at the cell interface, and the tilt direction of the liquid crystal film (A) 26 were directed as shown in Fig. 7.

Fig. 8 shows the transmittance ratio (white display 0V)/(black display 6V) as the contrast ratio from all the directions when the back light is on (transmission mode).

Fig. 9 shows the viewing angle characteristics of transmittance of displayed images of six graylevels from a white display of 0V to a black display of 6V, in the left and right directions when the back light is on (transmission mode).

Fig. 10 shows the viewing angle characteristics of transmittance of displayed images of six graylevels from a white display of 0V to a black display of 6V, in the upper and lower directions when the back light is on (transmission mode).

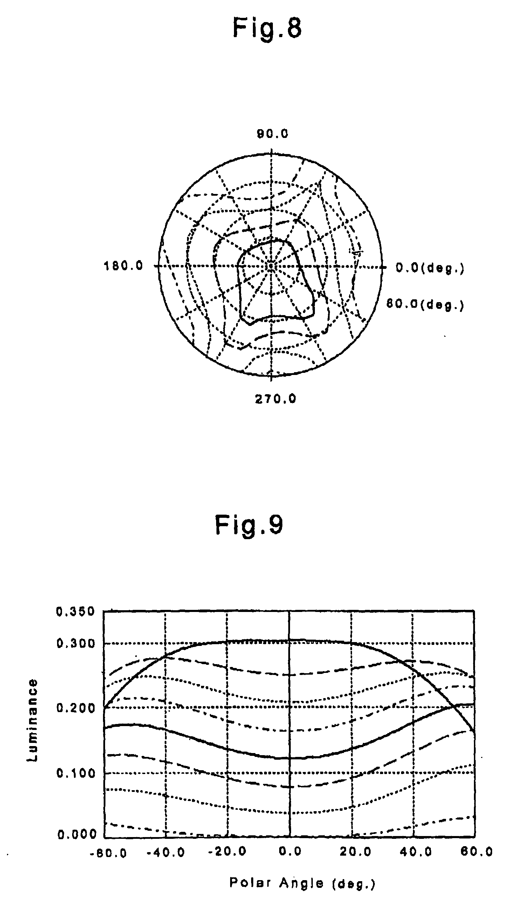

From the results shown in Figs. 8 to 10, it was found that the liquid crystal display device had excellent viewing angle characteristics particularly in the transmission mode.

### Example 3

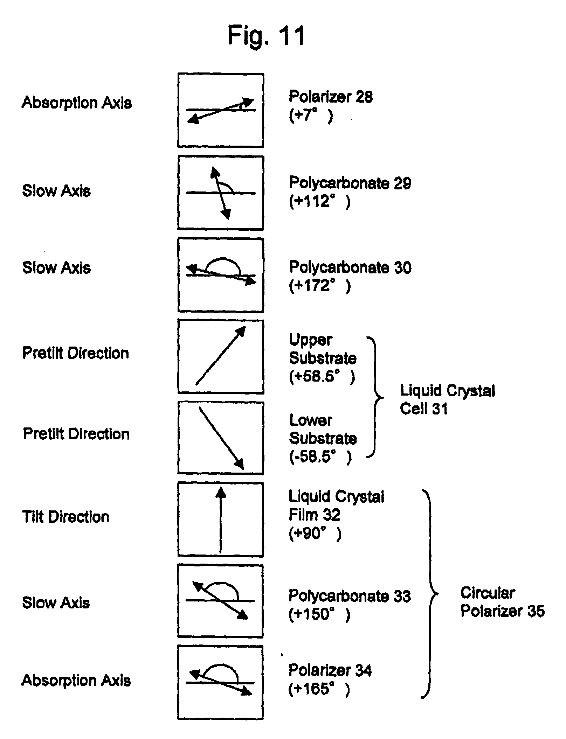

A TN-type transflective liquid crystal display device with the axis arrangement of each component as shown in Fig. 11 was produced using the liquid crystal film (A) with a thickness of 11 µm and a fixed nematic hybrid orientation whose the average tilt angle in the thickness was 28 degrees, obtained in Example 1.

A liquid crystal cell 31 used in this example was produced using ZLI-1695 produced by Merck Ltd. as a liquid crystalline material such that the twisted angle was a left-handed twist angle of 63 degrees and the liquid crystal layer thickness was 3.5 µm. The pretilt angle at the cell interface was 2 degrees, while the Δnd of the liquid crystal cell was approximately 210 nm.

A polarizer 28 with a thickness of 180 µm (SQW-862 manufactured by Sumitomo Chemical Industry Co., Ltd.) was arranged on the observer's side (upper portion in the drawing) of the liquid crystal cell 31. Between the polarizer 28 and the liquid crystal cell 31 was arranged an optical retardation compensator constituted by 60 µm thickness uniaxially stretched polycarbonate films 29 and 30. The Δnd of the polycarbonate film 29 was approximately 260 nm, while the Δnd of the polycarbonate film 30 was approximately 140 nm.

In the rear of the liquid crystal cell 31, viewed from an observer was arranged a circular polarizer 35 constituted by the 11 µm thick liquid crystal film (A) 32 with a fixed nematic hybrid orientation, a 60 µm thick polymeric stretched film 33 formed by a uniaxially stretched polycarbonate film, and a polarizer 34 (SQW-862 with a thickness of about 180 µm, manufactured by Sumitomo Chemical Industry Co., Ltd.). A back light (not shown) was arranged in the rear of the circular polarizer 35. The Δnd of the liquid crystal film (A) 32 was 120 nm, while the Δnd of the polymeric stretched film 33 was 260 nm. The circular polarizer 35 was a laminate wherein each layer was laminated to each other via a 25 µm thick tacky adhesive, i.e., polarizer / tacky adhesive layer / polycarbonate / tacky adhesive layer / adhesive layer 1 / liquid crystal substance layer / adhesive layer 2 / tacky adhesive layer. The total thickness of the circular polarizer was 326 µm.

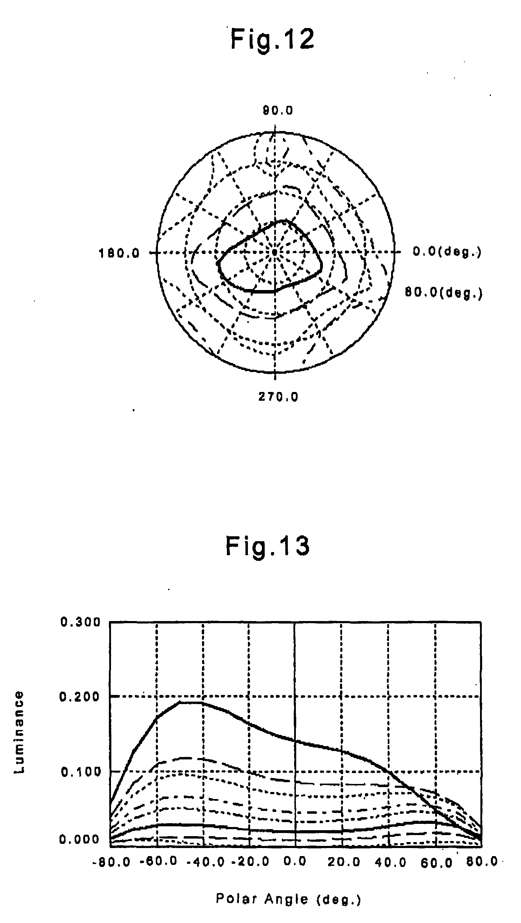

Fig. 12 shows the transmittance ratio (white display 0V)/(black display 6V) as the contrast ratio from all the directions when the back light is on (transmission mode).

Fig. 13 shows the viewing angle characteristics of transmittance of displayed images of six graylevels from a white display of 0V to a black display of 6V, in the left and right directions when the back light is on (transmission mode).

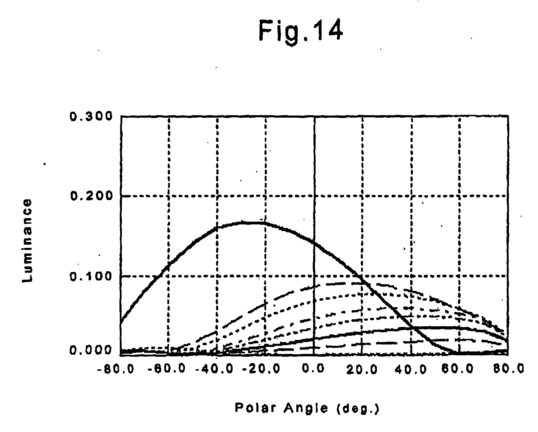

Fig. 14 shows the viewing angle characteristics of transmittance of displayed images of six graylevels from a white display of 0V to a black display of 6V, in the upper and lower directions when the back light is on (transmission mode).

From the results shown in Figs. 12 to 14, it was found that similarly to the ECB type, the liquid crystal display device of TN-type had excellent viewing angle characteristics particularly in the transmission mode.

### Comparative Example 1

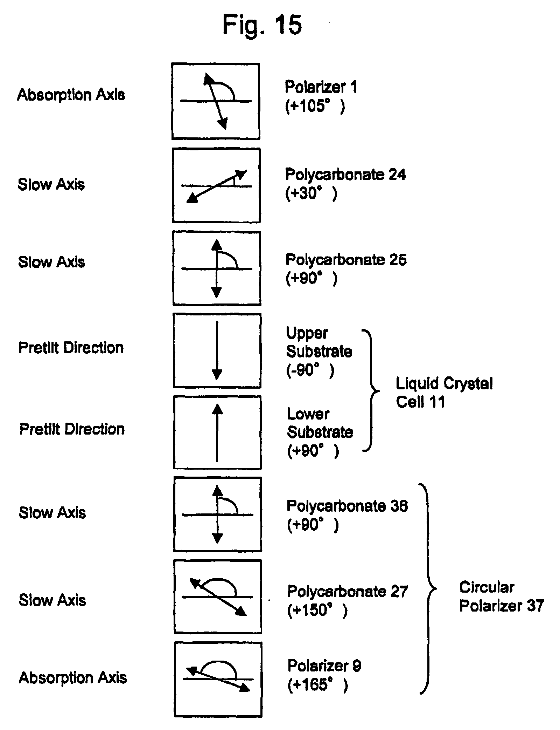

A liquid crystal display device was produced by repeating the procedures of Example 2 except that a 60 µm thick polycarbonate film 36 with a Δnd of approximately 100 nm was used instead of the liquid crystal film (A) 26 and arranged on the rear surface of a liquid crystal cell 12, as shown in Fig. 15. The circular polarizer 37 was a laminate wherein each layer was laminated to each other via a 25 µm thick tacky adhesive layer, i.e., polarizer / tacky adhesive layer / polycarbonate 36 / tacky adhesive layer / polycarbonate 37 / tacky adhesive layer. The total thickness of the circular polarizer was 375 µm.

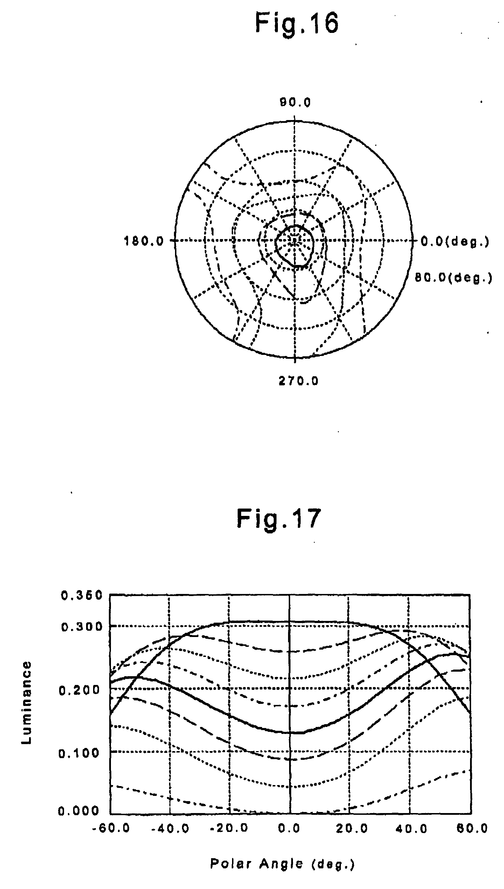

Fig. 16 shows the transmittance ratio (white display 0V)/(black display 6V) as the contrast ratio from all the directions when the back light is on (transmission mode).

Fig. 17 shows the viewing angle characteristics of transmittance of displayed images of six graylevels from a white display of 0V to a black display of 6V, in the left and right directions when the back light is on (transmission mode).

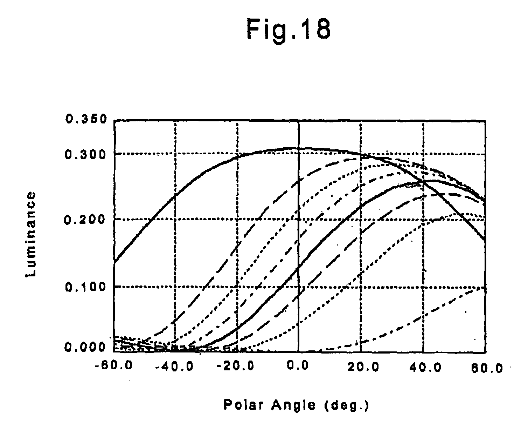

Fig. 18 shows the viewing angle characteristics of transmittance of displayed images of six graylevels from a white display of 0V to a black display of 6V, in the upper and lower directions when the back light is on (transmission mode).

Example 2 and Comparative Example 1 were compared in the viewing angle characteristics of the homogeneously oriented liquid crystal panels.

When the contrast contours in all the directions of Figs. 8 and 16 were compared, it was confirmed that Example 2 using the liquid crystal film 26 with a hybrid nematic structure was extremely improved in viewing angle characteristics, compared with Comparative Example 2 using the polycarbonate 36.

When the upper and lower and left and right direction graylevel characteristics which have been recognized as a drawback in the transmission mode of conventional displays were compared in Figs. 9 and 10 and Figs. 17 and 18, it was confirmed that the inversion properties were extremely improved using the liquid crystal film 26 with a hybrid nematic structure.

The total thickness can be made thinner using the liquid crystal film of Example 2 than using the polycarbonate film of Comparative Example 1.

### Comparative Example 2

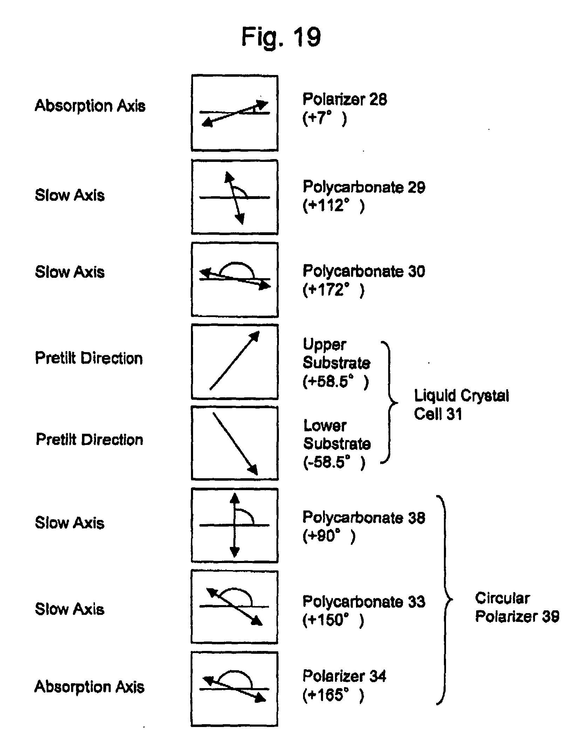

A liquid crystal display device was produced by repeating the procedures of Example 3 except that a 60 µm thick polycarbonate film 38 with a Δnd of approximately 120 nm was used instead of the liquid crystal film (A) 32 and arranged on the rear surface of the liquid crystal cell 31, as shown in Fig. 19. The circular polarizer 39 was a laminate wherein each layer was laminated to each other via a 25 µm thick tacky adhesive layer, i.e., polarizer / tacky adhesive layer / polycarbonate 38 / tacky adhesive layer / polycarbonate 39 / tacky adhesive layer. The total thickness of the circular polarizer was 375 µm.

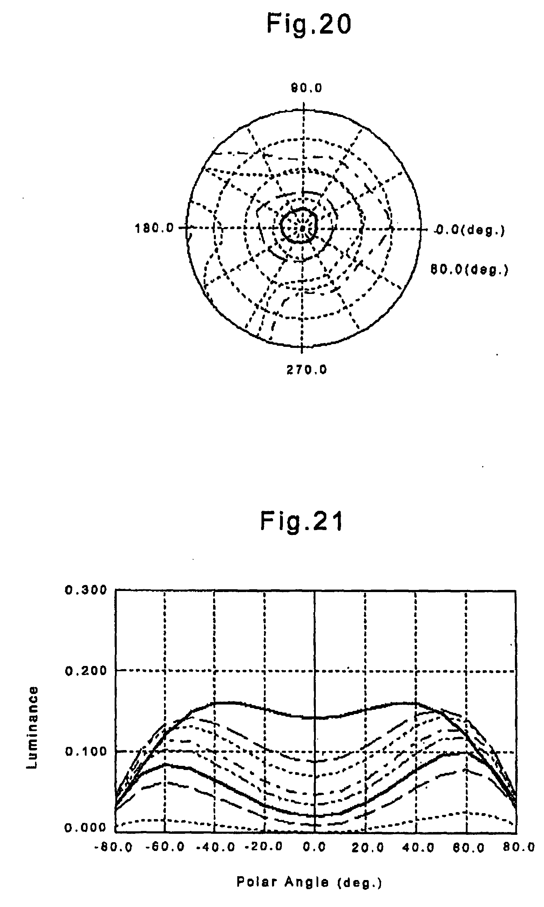

Fig. 20 shows the transmittance ratio (white display 0V)/(black display 6V) as the contrast ratio from all the directions when the back light is on (transmission mode).

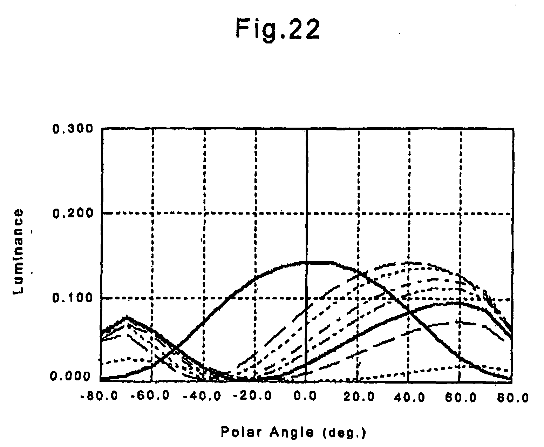

Fig. 21 shows the viewing angle characteristics of transmittance of displayed images of six graylevels from a white display of 0V to a black display of 6V, in the left and right directions when the back light is on (transmission mode).

Fig. 22 shows the viewing angle characteristics of transmittance of displayed images of six graylevels from a white display of 0V to a black display of 6V, in the upper and lower directions when the back light is on (transmission mode).

Example 3 and Comparative Example 2 were compared in the viewing angle characteristics of the TN-oriented liquid crystal panels.

When the contrast contours in all the directions of Figs. 12 and 20 were compared, it was confirmed that Example 3 using the liquid crystal film 32 with a hybrid nematic structure was extremely improved in viewing angle characteristics, compared with Comparative Example 2 using the polycarbonate 38.
When the upper and lower and left and right direction graylevel characteristics which have been recognized as a drawback in the transmission mode of conventional displays were compared in Figs. 13 and 14 and Figs. 21 and 22, it was confirmed that the inversion properties are extremely improved using the liquid crystal film 26 with a hybrid nematic structure.

The total thickness can be made thinner using the liquid crystal film of Example 3 than using the polycarbonate film of Comparative Example 2.

### [Applicability in the Industry]

As described above, the circular polarizer of the present invention is thin and has excellent circular polarization characteristics. The liquid crystal display device equipped with the circular polarizer is characterized in that it can provide bright display images of high contrast and is less dependent on the viewing angle.

### [Brief Description of the Drawings]

Fig. 1 is a conceptual view for describing the tilt angle and twist angle of a liquid crystalline molecule.
Fig. 2 is a conceptual view of the orientation structure of a liquid crystal film constituting a second optical anisotropic element.
Fig. 3 is a conceptual view for describing the pretilt direction of a liquid crystal cell.
Fig. 4 is a schematic cross-sectional view illustrating the layer arrangement of the transflective liquid crystal display device of the present invention used in Example 2.
Fig. 5 is a schematic cross-sectional view illustrating the layer arrangement of the transflective liquid crystal display device of another embodiment of the present invention.
Fig. 6 is a schematic cross-sectional view illustrating the layer arrangement of the transflective liquid crystal display device of another embodiment of the present invention.
Fig. 7 is a plan view showing the angular relations of the absorption axes of the polarizers, the pretilt directions of the liquid crystal cell, the tilt direction of the liquid crystal film, and the slow axes of the polymeric stretched films and of the optical retardation compensator, used in Example 2.
Fig. 8 is a diagram showing the contrast ratio when the transflective liquid crystal display device of Example 2 was viewed from all the directions.
Fig. 9 shows the viewing angle characteristics of left and right direction transmittance of displayed images of six graylevels from 0V to 6V of the transflective liquid crystal display device of Example 2.

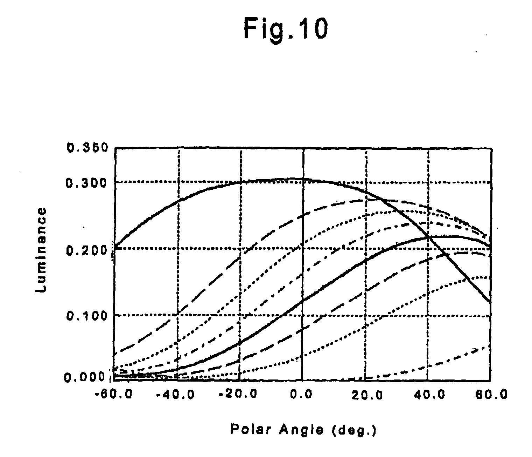

Fig. 10 shows the viewing angle characteristics of upper and lower direction transmittance of displayed image of six graylevels from 0V to 6V of the transflective liquid crystal display device of Example 2.
Fig. 11 is a plan view showing the angular relations of the absorption axes of the polarizers, the pretilt directions of the liquid crystal cell, the tilt direction of the liquid crystal film, and the slow axes of the polymeric stretched films and of the optical retardation compensator, used in Example 3.
Fig. 12 is a diagram showing the contrast ratio when the transflective liquid crystal display device of Example 3 was viewed from all the directions.
Fig. 13 shows the viewing angle characteristics of left and right direction transmittance of displayed images of six graylevels from 0V to 6V of the transflective liquid crystal display device of Example 3.
Fig. 14 shows the viewing angle characteristics of upper and lower direction transmittance of displayed image of six graylevels from 0V to 6V of the transflective liquid crystal display device of Example 3.
Fig. 15 is a plan view showing the angular relations of the absorption axis of the polarizer, the pretilt directions of the liquid crystal cell, and the slow axes of the polymeric stretched films and of the optical retardation compensator, used in Comparative Example 1.
Fig. 16 is a diagram showing the contrast ratio when the transflective liquid crystal display device of Comparative Example 1 was viewed from all the directions.
Fig. 17 shows the viewing angle characteristics of left and right direction transmittance of displayed images of six graylevels from 0V to 6V of the transflective liquid crystal display device of Comparative Example 1.
Fig. 18 shows the viewing angle characteristics of upper and lower direction transmittance of displayed image of six graylevels from 0V to 6V of the transflective liquid crystal display device of Comparative Example 1.
Fig. 19 is a plan view showing the angular relations of the absorption axes of the polarizers, the pretilt directions of the liquid crystal cell, and the slow axes of the polymeric stretched films and of the optical retardation compensator, used in Comparative Example 2.
Fig. 20 is a diagram showing the contrast ratio when the transflective liquid crystal display device of Comparative Example 2 was viewed from all the directions.
Fig. 21 shows the viewing angle characteristics of left and right direction transmittance of displayed images of six graylevels from 0V to 6V of the transflective liquid crystal display device of Comparative Example 2.
Fig. 22 shows the viewing angle characteristics of upper and lower direction transmittance of displayed image of six graylevels from 0V to 6V of the transflective liquid crystal display device of Comparative Example 2.

## Claims

1. A circular polarizer comprising at least a polarizer and an optical anisotropic element having an optical retardation of about 1/4 wavelength in a visible light region, wherein the optical anisotropic element comprises at least a 50 µm or less thick liquid crystal film (A) obtained by fixing a liquid crystal substance exhibiting an optically positive uniaxiality, in a nematic hybrid orientation with an average tilt angle of 5 to 35 degrees, formed when the substance is in a liquid crystal state.

2. The circular polarizer according to claim 1 wherein said optical anisotropic element comprises at least the liquid crystal film (A) and a polymeric stretched film.

3. The circular polarizer according to claim 1 wherein said optical anisotropic element comprises at least the liquid crystal film (A) and a 50 µm or less thick liquid crystal film (B) obtained by fixing a liquid crystal substance exhibiting an optically positive uniaxiality, in a nematic orientation formed when the substance is in a liquid crystal state.

4. The circular polarizer according to any of claims 1 to 3 wherein said liquid crystal film (A) is a liquid crystal film obtained by allowing a liquid crystal substance exhibiting an optically positive uniaxiality, in a liquid crystal state, to be aligned in a nematic hybrid orientation and by cooling the aligned substance to be fixed in a glassy state.

5. The circular polarizer according to any of claims 1 to 3 wherein said liquid crystal film (A) is a liquid crystal film obtained by allowing a liquid crystal substance exhibiting an optically positive uniaxiality, in a liquid crystal state, to be aligned in a nematic hybrid orientation and by fixing the aligned substance by cross-linking.

6. A liquid crystal display device comprising a liquid crystal cell in which a liquid crystal layer is sandwiched between a pair of substrates each having an electrode, and the circular polarizer defined in claim 1.

7. A transflective type liquid crystal display device comprising a liquid crystal display device provided with a liquid crystal cell wherein a liquid crystal layer is sandwiched between a first substrate with a transparent electrode and a second substrate with a transflective electrode; at least one optical retardation compensator disposed on the surface, opposite to the surface facing to the liquid crystal layer, of the first substrate; and one polarizer disposed on the optical retardation compensator, wherein the circular polarizer defined in claim 1 is disposed on the surface, opposite to the surface facing the liquid crystal layer, of the second substrate.

8. A transflective type liquid crystal display device comprising a liquid crystal display device provided with a liquid crystal cell wherein a liquid crystal layer is sandwiched between a first substrate with a transparent electrode and a second substrate with a transflective electrode; at least one optical retardation compensator disposed on the surface, opposite to the surface facing to the liquid crystal layer, of the second substrate; and one polarizer disposed under the optical retardation compensator, wherein the circular polarizer defined in claim 1 is disposed on the surface, opposite to the surface facing the liquid crystal layer, of the first substrate.

9. A transflective type liquid crystal display device comprising a liquid crystal display device provided with a liquid crystal cell wherein a liquid crystal layer is sandwiched between a first substrate with a transparent electrode and a second substrate with a transflective electrode, wherein the circular polarizers defined in claim 1 are disposed on both sides of the liquid crystal cell.

10. The liquid crystal display device according to any of claims 6 to 9, wherein the liquid crystal layer is of a twisted nematic mode.

11. The liquid crystal display device according to any of claims 6 to 9, wherein the liquid crystal layer is of a super twisted nematic mode.

12. The liquid crystal display device according to any of claims 6 to 9, wherein the liquid crystal layer is of an ECB mode.

13. The liquid crystal display device according to any of claims 6 to 9, wherein the liquid crystal layer is of a HAN mode.
